# EUROPEAN PATENT SPECIFICATION

(11) **EP 2 845 293 B1**
(45) Date of publication and mention of the grant of the patent: **15.06.2016**
(21) Application number: 13716108.9
(22) Date of filing: 26.03.2013
(51) Int. Cl.: H02K 1/20, H02K 9/00, H02K 9/19

(54) **INTERNALLY COOLED SERVO MOTOR WITH A SEGMENTED STATOR**
INNENGEKÜHLTER SERVOMOTOR MIT EINEM SEGMENTIERTEN STATOR
SERVOMOTEUR À REFROIDISSEMENT INTERNE À STATOR SEGMENTÉ

(30) Priority: 30.04.2012 US 201261640659 P
(43) Date of publication of application: 11.03.2015
(73) Proprietor: Parker Hannifin Corporation, Cleveland, OH 44124 (US)
(72) Inventor: HUARD, Steven, R., New Ulm, Minnesota 56073 (US); HENDRICKSON, Eric, New Ulm, Minnesota 56073 (US); DREXLER, Jarrod, New Ulm, Minnesota 56073 (US); SCHULTZ, Jay, Rohnert Park, California 94928 (US)
(74) Representative: Belcher, Simon James
(86) International application number: PCT/US2013/033779
(87) International publication number: WO 2013/165629

(56) References cited:
- EP-A1- 0 684 682
- EP-A1- 2 163 528
- EP-A2- 0 915 554
- WO-A1-2008/132041
- WO-A2-2004/010559
- WO-A2-2012/040535
- JP-A- 2009 131 030
- US-A1- 2002 109 420
- US-A1- 2010 102 649
- US-A1- 2012 074 800

## Description

The present invention relates to active cooling of AC and DC electric motors, and more particularly, electric motors having a cooling tube formed in the back of the lamination segment and inside of the motor housing, which allows the use of water based or electrically conductive coolants to cool the stator coils.

There are three main classes of prior art for cooling an electric motor. The first class of liquid cooling involves using a liquid tight housing that is installed over the stator housing. The second class of liquid cooling involves flooding the inside of the motor housing with oil, or a suitable dielectric cooling fluid. The third class of liquid cooling involves using a two-phase liquid/gas coolant as disclosed in US-5952748.

There are a variety of disadvantages associated with these classes. Such disadvantages are disclosed in US-A-2012/323799.

US-A-2012/074800 discloses a stator in which a plurality of teeth extend inwardly from a yoke, defining slots between the teeth. A coil is wound each of the teeth. A ring assembly can be positioned within the yoke, in contact with the tips of the teeth. The ring assembly includes cooling channels which have cooling tubes extending through them.

The invention provides an electrical device which comprises a stator, as defined in claim 1.

A fluid cooled segmented servo motor lamination construction can produce a very high power density. The high power density is achieved by incorporating a cooling tube into the back of the lamination segment and inside of the motor housing; a tapered pole body is used so that the magnetic flux density does not become elevated as it travels around the cooling tube; rectangular, square or ribbon wire may also be used to reduce thermal resistance and increase slot fill; round wire is also possible.

The output power of the semomotor can be increased by cooling the motor with a fluid. By placing the cooling tube in the back of the segmented lamination pole, the cooling path is shortened over external cooling. Also, the motor is smaller because an external fluid jacket is eliminated. By placing the cooling tube slot in the centre of the lamination at the outer diameter and tapering the pole, the magnetic flux path can have minimum interruption, and the magnetic saturation is reduced. In one embodiment, the resistive losses in the motor are minimized by utilizing rectangular wire. By combining the cooling tube location, with the tapered pole, and the high slot fill, the power density of the motor is maximized.

Embodiments of this invention will now be described in further detail with reference to the accompanying drawings, in which:
FIG. 1 is a cross-section of an electric motor.
FIGs. 2 to 4 are perspective views of a stator pole.
FIGs. 5 to 6 are perspective views of a stator.
FIG. 7 is an exploded view of a portion of the stator illustrated in Figure 5.

An electric motor generates heat in the process of transforming electrical energy into mechanical energy. If this heat is not effectively dissipated to the surrounding environment the motor internal temperature will rise above the temperature rating of the individual components. Without an active cooling system such as a fan or liquid cooling system, the servo motor continuous output power can be extremely reduced from its full potential.

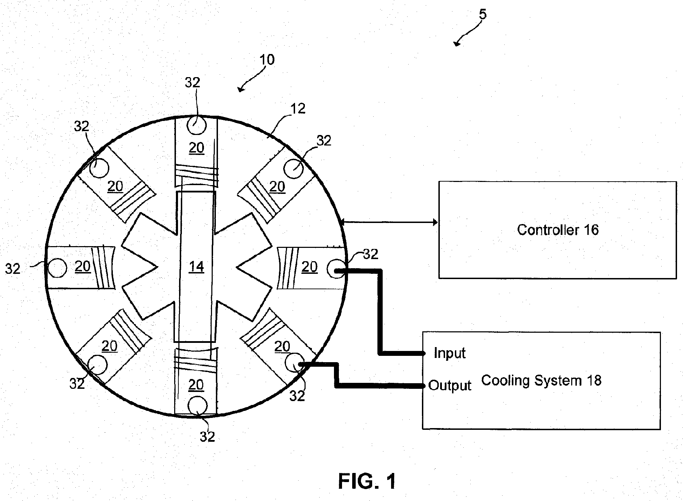

A motor control system 5 for a servo motor 10 is shown in Figure 1. The servo motor 10 includes a stator 12 and a rotor 14. The stator 12 and the rotor 14 are configured are coaxially aligned such that the rotor and the stator 12 is selectively actuable to induce rotation of the rotor 14, as is conventional. A controller 16 may be used to control operation of the servo motor 10. A cooling system 18 may also be coupled to the stator through a fluid tube, as discussed below.

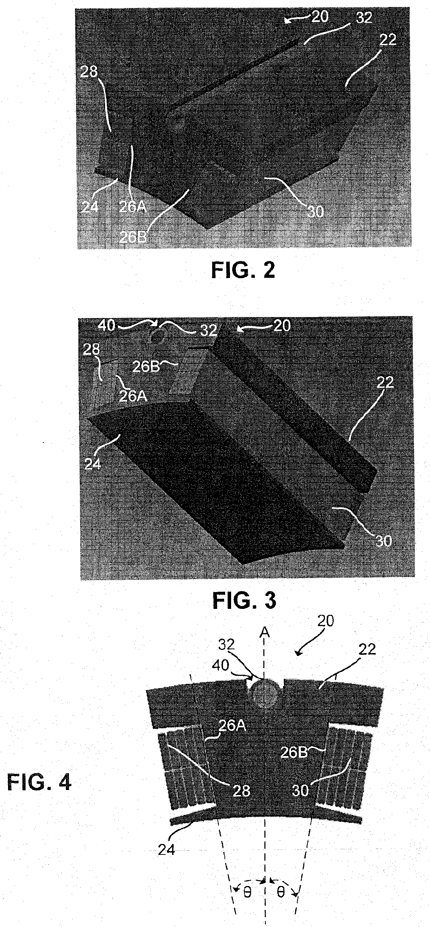

Referring to Figures 2 to 4, the stator 12 may be formed from a plurality of segmented laminates, which is conventional. The stator 12 includes a plurality of poles 20. Each of the poles 20 includes first and second surfaces 22, 24. The first and second surfaces are spaced apart (e.g., a distance (d)). Each of the poles 20 also has a pair of slots 26A, 26B defined between the first surface and the second surface on respective sides of each pole. Each pair of slots is configured to receive at least one winding 28, 30.

Each pole 20 further includes a cooling tube 32 coupled to the first surface 22, wherein the cooling tube is at least partially encompassed within the first surface 22. The first surface may include a recess 40, which may also be in the form of through hole or the like for coupling the cooling tube 32 to the pole 20. The cooling tube 32 is secured in a central portion of the first surface 22 along an axis of symmetry (A) of the pole. Preferably, the cooling tube 32 is embedded within the first surface or below the first surface 22 in such a manner that the cooling tube does not extend outward from the pole more than the first surface. In other embodiments, the cooling tube 32 may extend beyond surface 22. In still other embodiments, it may be desirable for separate cooling tubes 32 for forming more than one cooling tube (e.g., separate cooling tubes having parallel flow paths). In still other embodiments, or cooling tube 32 may be formed from a single continuous tube or tubes. Likewise, the cooling tube or tubes may be formed from a plurality of cooling tubes that are coupled together in an appropriate manner.

Each of the pairs of slots 26A, 26B are tapered a prescribed amount along an axis of symmetry of associated with each pole. For example, the slots 26A, 26B may be tapered between 5 and 30 degrees with respect to the axis of symmetry (A), as illustrated in Figure 4. Preferably, each pair of slots 26A, 26B is tapered the same prescribed amount (θ). In another embodiment, the taper angles may be different.

The windings 28 and 30 may be any type of winding. In one embodiment, each winding has a rectangular cross-section, in order to increase slot fill and provide for low resistive losses. A tapered insulator cap may be used to force the rectangular wire to sit flat against the pole, thus reducing thermal impedance. In another embodiment, the windings 28 and 30 may have a circular cross-section. Windings can be manufactured without welds, solder or brazing, which increases reliability.

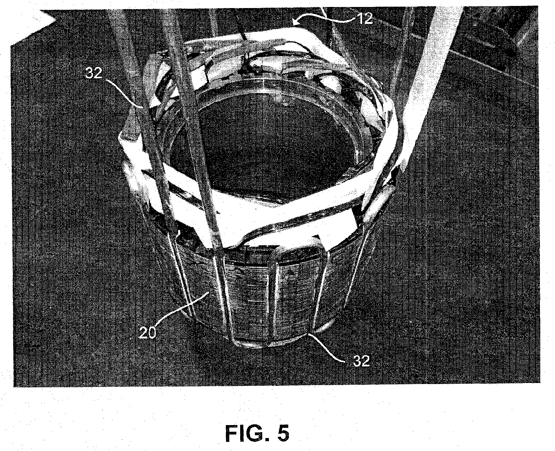

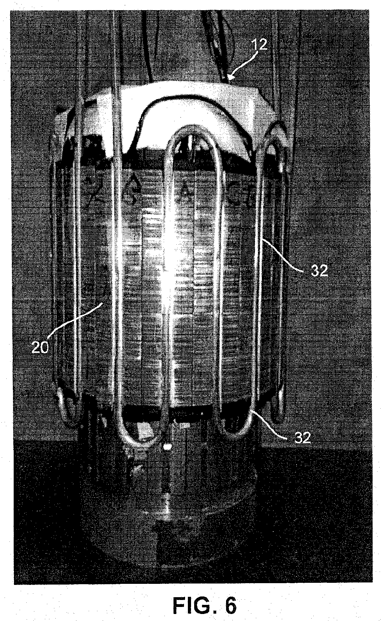

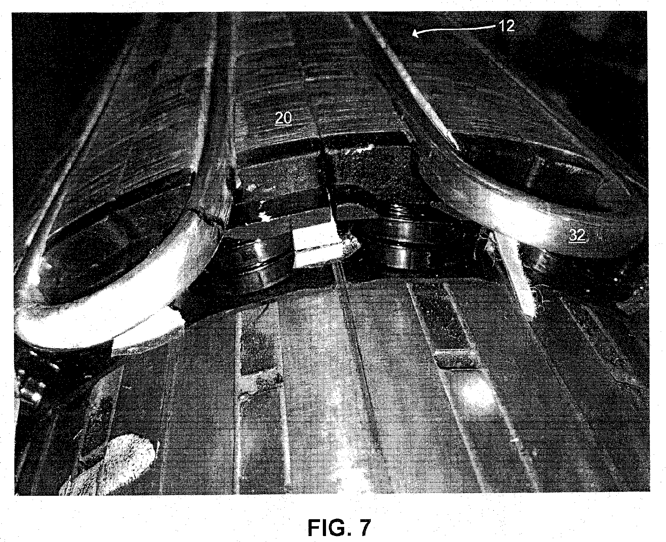

As shown in Figures 5 to 7, the cooling tube 32 is continuous and is routed to each of the poles. The cooling tube 32 includes an input end and an output end that is coupled to a cooling system (not shown). The cooling tube 32 may be made from any desirable material. Such materials include, for example, a copper alloy, an aluminium alloy, a stainless steel alloy, a polymide, etc. Since the stator 12 is cooled internally, an external water jacket that is common in certain systems is eliminated. This results in reduced size, weight and cost of the motor 10. A thermally conductive epoxy or paste can be applied between the cooling tube 32 and the pole 20 to further improve thermal transfer.

The cooling tube is suitable for transfer of fluid to provide cooling to the motor 10. Such fluids may include, water, a mixture of water and glycol, R134, oil, a two-phase liquid gas mixture.

A servo motor 10 in accordance to this invention can be constructed with any desired number of stator teeth and magnet segments on the rotor. That is, the claimed invention is not limited to a particular number of stator teeth, magnet segments, or a particular cooling tube travel path. The servo motor depicted in Figures 1 to 7 is a permanent magnet synchronous servo motor. It is constructed with a rotor 14 that has permanent magnet segments attached circumferentially. The rotor 14 rotates on bearings, as is conventional. The stator 12 is constructed from electrical grade steel in the form of a stack of laminations in order to reduce eddy current and hysteresis losses. Coils of wire or windings 28, 30 are installed into the slots 26A, 26B between the laminations stacks (e.g., poles 20). A feedback device (not shown) is used to sense the rotor 14 position during motor operation.

During the operation of the servo motor, current is commanded through the motor windings 28, 30 that is a function of rotor position, and the commanded torque. Resistive losses in the motor windings 28, 30 and eddy currents and hysteresis losses in the lamination stack (e.g., poles 20) cause the motor to heat. The heat generated must be effectively removed from the motor or the motor will over heat.

The electric motor is equipped with a continuous cooling tube 32, as set forth above. Due to the coupling of the cooling tube 32 to the pole, as described above, there is a shorter heat flow path from the heat source to the heat sink over conventional methods. There is also a low thermal resistance path from the heat source to the heat sink.

In order to reduce the complexity of the assembly it is preferred that the tube has a minimum number of interconnection within the motor body. Therefore, a single pass continuous tube is preferred. It is possible to assemble the motor with a single continuous tube if the motor stator is built in segments. Likewise, it is preferable to locate the fluid tube 32 along the axis of symmetry (A) for each pole. Such location provides for optimization of magnetic flux flow, minimized magnetic lamination saturation, and minimum motor size. For in-slot cooling, it is possible to maximize the thermal path from the winding to the cooling tube by maximizing the thermal contact between the cooling tube and the wires and then encapsulate the entire stator in a thermally conductive epoxy. The encapsulation process also protects the insulation from abrasion failures.

The internal cooling loop can be used along with external cooling method to make even further improvement to the servo motor performance. The internal cooling loop will remove the heat from the resistive losses while the external cooling on the housing can remove the eddy current and hysteresis losses in the electrical steel, for example.

This invention is not limited to permanent magnet synchronous servo motors. It can also work on induction motors, PM brushed motors, universal motors, and variable reluctance motors.

## Claims

1. An electrical device (10) comprising:
a stator (12) having a plurality of pole bodies (20), in which each pole body includes a first surface (22) and a second surface (24); the first surface and the second surface are spaced apart and have a pair of slots (26A, 26B) defined between the first surface and the second surface on respective sides of each pole body,
in which the pair of slots is configured to receive at least one winding (28, 30), and each pole body further includes a cooling tube (32) coupled to the first surface, in which the cooling tube is at least partially encompassed within the first surface, and
**characterised in that** the pole bodies are tapered and prevent elevation of magnetic flux density travelling around the cooling tube.

2. The electrical device of claim 1, in which the cooling tube (32) is secured in a central portion of the first surface (22) along an axis of symmetry (A) of the tapered pole body (20).

3. The electrical device of claim 1 or claim 2, in which the cooling tube (32) is embedded within the first surface (22) in such a manner that the cooling tube does not extend outward from the tapered pole body (20) more than the first surface.

4. The electrical device of any one of claims 1 to 3, in which the stator (12) is formed from a plurality of segmented laminates.

5. The electrical device of any one of claims 1 to 4, in which the each of the pairs of slots (26A, 26B) are tapered a prescribed amount along an axis of symmetry (A) associated with each tapered pole body (20).

6. The electrical device of any one of claims 1 to 5, in which each winding (28, 30) has a rectangular cross-section or a circular cross-section.

7. The electrical device of any one of claims 1 to 6, in which the cooling tube (32) is a continuous tube.

8. The electrical device of any one of claims 1 to 7, in which the cooling tube (32) is formed from a plurality of cooling tubes.

9. The electrical device of claim 8, in which the cooling tubes (32) form a plurality of parallel flow paths in each tapered pole body (20).

10. The electrical device of any one of claims 1 to 9, in which the cooling tube (32) is made from one of a copper alloy, an aluminium alloy, a stainless steel alloy or a polyimide.

11. The electrical device of any one of claims 1 to 10, further including a rotor (14) having at least two magnet poles that is installed within the stator (12), in which the magnet poles are presented circumferentially on the said rotor.

12. The electrical device of any one of claims 1 to 11, in which the cooling tube (32) is suitable for transfer of at least one of a group of fluids consisting of water, a mixture of water and glycol, R134, oil, and a two-phase liquid gas mixture.

13. A servo motor (10) comprising:
a stator (12) as claimed in any one of claims 1 to 12, and
a rotor (14) that is installed coaxially within the said stator, in which the rotor includes at least two slots on the rotor and at least two conductive bars on the rotor that extend circumferentially on the rotor.

## Patentansprüche

1. Ein elektrisches Gerät (10) mit:
einem Stator (12) mit einer Mehrzahl von Polkörpern (20), wobei jeder Polkörper eine erste Fläche (22) und eine zweite Fläche (24) umfasst und die erste Fläche und die zweite Fläche voneinander beabstandet sind und ein Spaltpaar (26A, 26B) haben, die zwischen der ersten Fläche und der zweiten Fläche auf entsprechenden Seiten jedes Polkörpers festgelegt sind,
wobei das Spaltpaar dazu eingerichtet ist, um mindestens eine Wicklung (28, 30) aufzunehmen, und jeder Polkörper ferner eine Kühlröhre (32) umfasst, die mit der ersten Fläche verbunden ist, wobei die Kühlröhre innerhalb der ersten Fläche eingefasst ist, und
**dadurch gekennzeichnet, dass** die Polkörper angeschrägt sind und eine Erhöhung der um die Kühlröhre verlaufenden magnetischen Flussdichte verhindern.

2. Das elektrische Gerät nach Anspruch 1, **dadurch gekennzeichnet, dass** die Kühlröhre (32) in einem mittleren Abschnitt der ersten Fläche (22) entlang einer Symmetrieachse (A) des angeschrägten Polkörpers (20) gesichert ist.

3. Das elektrische Gerät nach Anspruch 1 oder Anspruch 2, **dadurch gekennzeichnet, dass** die Kühlröhre (32) in einer derartigen Weise in der ersten Fläche (22) eingefasst ist, dass die Kühlröhre sich nicht weiter als die erste Fläche aus dem angeschrägten Polkörper (20) erstreckt.

4. Das elektrische Gerät nach einem der Ansprüche 1 bis 3, **dadurch gekennzeichnet, dass** der Stator (12) aus einer Mehrzahl von segmentierten Schichten geformt ist.

5. Das elektrische Gerät nach einem der Ansprüche 1 bis 4, **dadurch gekennzeichnet, dass** jedes der Spaltpaare (26A, 26B) um einen vorgegebenen Betrag entlang einer Symmetrieachse (A) angeschrägt ist, die jedem angeschrägten Polkörper (20) zugeordnet ist.

6. Das elektrische Gerät nach einem der Ansprüche 1 bis 5, **dadurch gekennzeichnet, dass** jede Wicklung (28, 30) einen rechteckigen Querschnitt oder einen kreisförmigen Querschnitt hat.

7. Das elektrische Gerät nach einem der Ansprüche 1 bis 6, **dadurch gekennzeichnet, dass** die Kühlröhre (32) eine durchgehende Röhre ist.

8. Das elektrische Gerät nach einem der Ansprüche 1 bis 7, **dadurch gekennzeichnet, dass** die Kühlröhre (32) aus einer Mehrzahl von Kühlröhren geformt ist.

9. Das elektrische Gerät nach Anspruch 8, **dadurch gekennzeichnet, dass** die Kühlröhren (32) in jedem angeschrägten Polkörper (20) eine Mehrzahl von parallelen Durchflusspfaden formen.

10. Das elektrische Gerät nach einem der Ansprüche 1 bis 9, **dadurch gekennzeichnet, dass** die Kühlröhre (32) aus einer Kupferlegierung, einer Aluminiumlegierung, einer rostfreien Stahllegierung oder einem Polyimid hergestellt ist.

11. Das elektrische Gerät nach einem der Ansprüche 1 bis 10, **dadurch gekennzeichnet, dass** es ferner einen Rotor (14) mit mindestens zwei Magnetpolen umfasst, der in dem Stator (12) installiert ist, wobei die Magnetpole entlang des Umfangs an dem besagten Rotor vorgesehen sind.

12. Das elektrische Gerät nach einem der Ansprüche 1 bis 11, **dadurch gekennzeichnet, dass** die Kühlröhre (32) geeignet ist, mindestens eine aus einer Gruppe von Fluiden zu übertragen, die sich aus Wasser, einem Gemisch von Wasser und Glykol, R134, Öl und einem Zwei-Phasen-Flüssigkeitsgasgemisch zusammensetzt.

13. Ein Servomotor (10) mit:
einem Stator (12) nach irgendeinem der Ansprüche 1 bis 12, und
einem Rotor (14), der koaxial innerhalb des besagten Stators installiert ist, wobei der Rotor mindestens zwei Spalten an dem Rotor und mindestens zwei Leitstangen an dem Rotor umfasst, die sich in Umfangsrichtung an dem Rotor erstrecken.

## Revendications

1. Dispositif électrique (10), comprenant :
un stator (12) ayant une pluralité de noyaux polaires (20), dans lequel chaque noyau polaire comporte une première surface (22) et une deuxième surface (24) ; la première surface et la deuxième surface sont espacées et ont une paire de fentes (26A, 26B) définies entre la première surface et la deuxième surface sur des côtés respectifs de chaque noyau polaire,
dans lequel la paire de fentes est configurée pour recevoir au moins un enroulement (28, 30), et chaque noyau polaire comporte en outre un tube de refroidissement (32) couplé à la première surface, où le tube de refroidissement est au moins partiellement enfermé à l'intérieur de la première surface, et
**caractérisé en ce que** les noyaux polaires sont effilés et empêchent l'élévation d'une densité de flux magnétique circulant autour du tube de refroidissement.

2. Dispositif électrique de la revendication 1, dans lequel le tube de refroidissement (32) est fixé dans une partie centrale de la première surface (22) le long d'un axe de symétrie (A) du noyau polaire effilé (20).

3. Dispositif électrique de la revendication 1 ou 2, dans lequel le tube de refroidissement (32) est intégré à l'intérieur de la première surface (22) de telle manière que le tube de refroidissement ne s'étend pas vers l'extérieur du noyau polaire effilé (20) au-delà de la première surface.

4. Dispositif électrique de l'une quelconque des revendications 1 à 3, dans lequel le stator (12) est formé à partir d'une pluralité de stratifiés segmentés.

5. Dispositif électrique de l'une quelconque des revendications 1 à 4, dans lequel chacune des paires de fentes (26A, 26B) est effilée d'une quantité prescrite le long d'un axe de symétrie (A) associé à chaque noyau polaire effilé (20).

6. Dispositif électrique de l'une quelconque des revendications 1 à 5, dans lequel chaque enroulement (28, 30) présente une section transversale rectangulaire ou une section transversale circulaire.

7. Dispositif électrique de l'une quelconque des revendications 1 à 6, dans lequel le tube de refroidissement (32) est un tube continu.

8. Dispositif électrique de l'une quelconque des revendications 1 à 7, dans lequel le tube de refroidissement (32) est formé à partir d'une pluralité de tubes de refroidissement.

9. Dispositif électrique de la revendication 8, dans lequel les tubes de refroidissement (32) forment une pluralité de trajets d'écoulement parallèles dans chaque noyau polaire effilé (20).

10. Dispositif électrique de l'une quelconque des revendications 1 à 9, dans lequel le tube de refroidissement (32) est réalisé à partir de l'un d'un alliage de cuivre, d'un alliage d'aluminium, d'un alliage d'acier inoxydable ou d'un polyimide.

11. Dispositif électrique de l'une quelconque des revendications 1 à 10, comportant en outre un rotor (14) ayant au moins deux pôles magnétiques qui est installé à l'intérieur du stator (12), dans lequel les pôles magnétiques sont présentés de manière circonférentielle sur ledit rotor.

12. Dispositif électrique de l'une quelconque des revendications 1 à 11, dans lequel le tube de refroidissement (32) est adapté pour transférer au moins l'un d'un groupe de fluides constitué de l'eau, d'un mélange d'eau et de glycol, du R134, d'huile, et d'un mélange de gaz liquide à deux phases.

13. Servomoteur (10), comprenant :
un stator (12) tel que revendiqué dans l'une quelconque des revendications 1 à 12, et
un rotor (14) qui est installé de manière coaxiale à l'intérieur dudit stator, dans lequel le rotor comporte au moins deux fentes sur le rotor et au moins deux barres conductrices sur le rotor qui s'étendent de manière circonférentielle sur le rotor.
